# EUROPEAN PATENT SPECIFICATION

(11) **EP 1 490 217 B1**
(45) Date of publication and mention of the grant of the patent: **14.06.2006**
(21) Application number: 03706335.1
(22) Date of filing: 22.02.2003
(51) Int. Cl.: B32B 17/10, B32B 17/04, B32B 27/12, B32B 37/00

(54) **HIGH-FLEXIBLE LAMINATE FOR USE BY PROTECTION AGAINST AGGRESSIVE MEDIAS AND A METHOD FOR MANUFACTURE OF SAME**
HOCHFLEXIBLER SCHICHTSTOFF ZUR ANWENDUNG ALS SCHUTZ GEGEN AGRESSIVE MEDIEN UND VERFAHREN ZU DESSEN HERSTELLUNG
STRATIFIE TRES SOUPLE POUVANT ETRE UTILISE COMME PROTECTION CONTRE DES MILIEUX AGRESSIFS ET PROCEDE DE FABRICATION DUDIT STRATIFIE

(30) Priority: 05.03.2002 DK 200200334
(43) Date of publication of application: 29.12.2004
(73) Proprietor: KE-BURGMANN A/S, 6600 Vejen (DK)
(72) Inventor: TOFT, Uffe, Skodborg, DK-6630 Roedding (DK)
(74) Representative: Elmeros, Claus
(86) International application number: PCT/DK2003/000118
(87) International publication number: WO 2003/074269

(56) References cited:
- DE-A- 2 939 377
- GB-A- 1 460 820
- US-A- 3 653 949
- US-A- 3 779 854
- US-A- 3 790 403

## Description

The present invention relates to a high-flexible laminate for use by protection against aggressive fluids and a method of its manufacture.

In the field of covering of aggressive medias, i.e. gas or liquid fluids, such as connection joints, in particular expansion joints, in pipe structures in flue gas installations or the like, it is often used to fit a plurality of layers as an inner lining in order to create and to secure a tight connection joint in order to keep the aggressive fluids, such as hot gasses or humid condensates, inside the pipe structures.

This may be inappropriate in some situations, since each of the layers are individually weak and cannot withstand tension, pressure and vibration, just as it is expensive to mount the layered lining structure as the layers must be assembled to one unit.

From e.g. US-A-5,296,287, a barrier laminate is known, where different fluoroplastic layers are laminated together in order to achieve a resistant product, which can resist high thermal and mechanical impacts.

Such known barrier laminates have certain disadvantages. One of the layers normally consists of a coated and pre-sintered glass fabric, which makes the product very expensive to manufacture. The laminate is kept together by a PFT or a MFA film, which are modified PTFE (polytetrafluoroethylene) types, which under extreme circumstances at high temperatures no longer have the same high resistance as the PTFE materials.

In WO01/19610 a single membrane composite material for an expansion joint is described. This material consists of a non-woven mat which is surface coated by a dispersion on one side and a fluoropolymer film component is laminated onto the coated side. However, this laminate has no significant mechanical strength and is dedicated to be used as an insulation material together with other layers having different properties. The non-woven mat has no significant load bearing capabilities and the lamination by an adhesive layer makes the resulting laminate relative stiff and inflexible.

Moreover, the achievement of a gas-tight seal in the assembly of the layers in an annular configuration may prove difficult, and there exists a serious risk of obtaining a leaky assembly since it is difficult to avoid this by the overlapping/interleaving of the laminates, and often this assembly operation is very labour intensive and thus it is a very expensive operation.

On this background, it is the object of the invention to provide a highly flexible laminate, which is better in resisting thermal and mechanical impacts than the hitherto known materials and which is simple and inexpensive to manufacture, fixate and assemble. It is another object to provide a method of achieving an inexpensive manufacture of such laminate.

The invention concerns a method of manufacture of a high-flexible laminate for use by protection against aggressive fluids according to claim 1, comprising the following steps: applying a dispersion including a bonding means to a first side of a woven glass fabric; drying the bonding means after the application of the dispersion to the glass fabric; laminating at least one unsintered PTFE foil onto the first side, including a subsequent sintering of the PTFE foil on the woven glass fabric wetted with the dispersion; applying an elastomeric or plastic material layer onto the second side of the woven glass fabric; and subsequently curing the laminate.

The invention further concerns a chemically and thermally resistant, high-flexible laminate for use by protection against aggressive fluids, obtained by performing the method according to claim 1, said laminate comprising a first outer layer of fluoropolymer foil, an intermediate layer consisting of a woven glass fabric dispersed with bonding means; and a second outer layer of an elastomeric or plastic material layer.

Hereby, there is provided a laminate with layers of different material properties and different physical and thermal operational and shaping and fitting characteristics. By the combination according to the invention, the different materials are processed into a laminate, which has a high flexibility both in terms of material properties in the sense of a high flexibility in being able to bend as well as a high flexibility in its area of use. This flexibility is achieved by sintering the PTFE film onto the dispersion-saturated, load bearing woven fabric. Hereby, no intermediate adhesive layer stiffens the laminate due to a fully compounded woven fabric and the laminate according to the invention retains a high degree of flexibility after the PTFE film is sintered. Moreover, the amount of dispersion may be regulated in order to adjust the amount of bonding force, which is required and wanted on the laminate, so that the PTFE film may be laminated to the glass fabric in such a manner that it afterwards is peelable. This makes it simple to assemble the laminate according to the invention, e.g. in connection with fitting it as an inner lining in a funnel structure or the like.

According to the invention, one side of the woven glass fabric is sprayed with a modified PTFE dispersion, which is modified to have limited flow properties, so that the PTFE material remains on this first side of the glass fabric. The modified PTFE dispersion can be sprayed onto the fabric in a very thin layer due to its high viscosity. One or more PTFE films of different or same thickness are then sintered onto the glass fabric with the modified PTFE dispersion acting as bonding means. The applied amount of dispersion is determinative for how strong the bonding will become, i.e. one can achieve different bonding strengths between the PTFE layer and the glass fabric according to requirements and needs. The laminate is to be mounted in a compensator (an expansion joint), where the ends of the laminate must be assembled. This usually includes a direct welding of a heavy inflexible laminate or a difficult disassembly of the layers in the laminate for the creation of the assembly joint. However, with a laminate according to the invention it is simple to create such an assembly, as the bonding force e.g. in the end region can be reduced, whereby it becomes easier to peel the PTFE layer off the fabric and create the assembly.

In a subsequent process, one or more layers of silicone or other types of elastomers or thermoplastic materials. Other elastomers could be fluorized rubber, EPDM, nitrile, neoprene, hypalone, butyl or polyurethane (PUR). Of thermoplastics could for instance be PVC, nylon, polyethylene (PE), polypropylene (PP) and modified types thereof.

The known technique for the application of PTFE in dispersion usually involves dripping or scraping with a doctor blade. According to the invention, the PTFE dispersion is applied by spraying, which results in large costs savings, since the PTFE material can be applied in very thin layers. By a method according to the invention, it is also easier to control the bonding effect by determining how many layers of dispersion, which are to be sprayed onto the fabric. This also results in an economic advantage since one is able to accurately control the bonding effect with respect to the precisely applied amount of dispersion.

The subsequent fitting operation is made easier since the materials are joined in a common element as a laminate rather than one is left to collect a plurality of layers during the fitting. This also leads to an economic saving since only one operation of cutting the laminate into size rather than two or more.

The joining process is made easy since the layers in the laminate can be separated, i.e. so that the PTFE side and the glass fabric can be separated and the individual layers can then be joined without having to fixate the other layers at the time of the joining.

The invention is described in more detail in the following under reference to the accompanying drawings, in which:
- fig. 1: is a schematic cross-sectional view of a laminate according to the invention, and
- fig. 2: is a diagram for the bonding force as a function of the applied amount of PTFE dispersion.

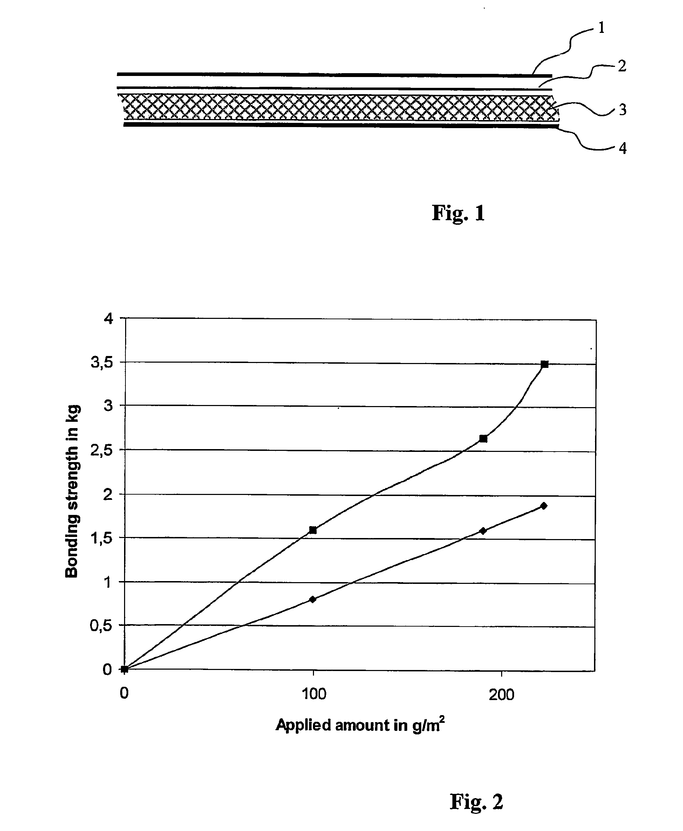

Referring to figure 1, the layer 1 are PTFE films having a thickness of 0.05 mm to 0.2 mm, which are laid out in a layer with a thickness ranging from 0.1 mm to 1.5 mm.

The layer 2 is a layer of PTFE dispersion applied to the woven fabric 3 by spraying. This dispersion is a mixture of a standard PTFE dispersion having a dry weight of about 60% to which is added an amount of Hydrous Calcium Sulphate - CaSO₄2H₂O - as stabilisator. The PTFE dispersion, which normally is a basis Teflon, i.e. a PTFE material dispersed in an aqueous fluid, is modified to have a limited flow capability, so that the PTFE material does not penetrate through the glass fabric 3 by its application.

The layer 3 is a woven glass fabric having a weight ranging from 300 to 5000 g/m², preferably between 200 to 500 g/m². The woven glass fabric constitutes the load-bearing layer in the laminate. Due to its woven structure the fabric exhibits both a good flexibility and tensile strength.

The layer 4 is an elastomer or a soft, flexible thermoplastic material,, however preferably silicone, which is applied in a layer from 50 g/m² to 1000 g/m², preferably between 200 to 500 g/m² depending on the field of use of the laminate.

The process the laminate is manufacture by, preferably progresses in the following manner: The woven glass fabric is applied by spraying with a PTFE dispersion, which is dried out in an oven or similar heating appliance. Onto the semi-produced fabric, unsintered virgin PTFE films are applied by sintering the films onto the fabric in a pressing process or rolling process in the temperature range of 327°C to 425°C.

The new semi-produced fabric with the PTFE sintered onto its first side, is then applied an resilient coating of an elastomeric or thermoplastic material on the second side by a scrapping action or an extrusion process and is then cured in an oven at a temperature which is chosen in accordance with the thermal characteristics and requirements of the final coating. The thermal range of use of the finished laminate is dependent on the thermal stability of the resilient layer 4. Typically for e.g. a silicone coating with utility temperatures of up to 240°C, the maximum utility temperature would be 270°C, but ought to be set lower, e.g. 250°C in order to utilise the insulation effect of the woven glass fabric and the PTFE surface as a safety factor.

In figure 2, the diagram shown, show the relation between the bonding strength and the applied amount of modified PTFE dispersion. The two curves show the minimal and the maximal bonding force, respectively, between the woven glass fabric and the PTFE foils as a function of the applied amount of modified PTFE dispersion. The weights are calculated on the surface fixated residue amount after the drying.

As shown in the diagram, it is possible to determine the bonding strength as a function of the applied amount of mod. PTFE dispersion. The minimum bonding strength is found to be substantially linearly proportional with the amount applied. The PTFE dispersion is absorbed in the fabric from the first side where the dispersion is applied and from where it penetrates into the fabric. Thus, the second side of the fabric is not wetted with dispersion, which means that the resilient layer can be applied and bonded firmly to the second side of the fabric.

## Claims

1. A method of manufacture of a high-flexible laminate for use by protection against aggressive fluids, comprising the following steps:
applying a modified PTFE dispersion including a bonding means and thickening means, said dispersion being applied to a first side of a woven glass fabric in a predetermined amount for achieving a desired bonding force;
drying the dispersion after the application of the dispersion to the glass fabric;
laminating at least one unsintered PTFE foil onto the first side, including a subsequent sintering of the PTFE foil on the woven glass fabric wetted with the dispersion;
applying an elastomeric plastic material layer onto the second side of the woven glass fabric; and
subsequently curing the laminate.

2. A method according to claim 1, whereby the modified PTFE dispersion, which is sprayed onto the glass fabric by one or more sprayings.

3. A method according to claim 1, whereby the drying of the PTFE dispersion takes place at a temperature within the range of 100°C to 200°C.

4. A method according to any of the claims 1 to 3, where the lamination process includes a sintering of the foil onto the fabric where the layers are being lead through heated elements at a predetermined pressure and temperature condition.

5. A method according to any of the claims 1 to 4, where the lamination process includes a rolling of the foil onto the fabric where the layers are being lead through rollers at a predetermined pressure and temperature condition.

6. A method according to any of the claims 1 to 5, where the PTFE foil may be an unsintered expanded PTFE foil (ePTFE foil) or an unsintered standard foil in one or more layers.

7. A method according to any of the claims 1 to 6, where the plastic material layer is made up by a silicone layer, which is applied by scraping a silicone, compound onto the second side of the woven glass fabric.

8. A method according to any of the claims 1 to 7, where the curing of the laminate takes place at a temperature in the range of 125°C to 200°C,

9. A method according to any of the claims 1 to 5, where the plastic material layer is made up by a polyurethane (PUR) layer.

10. A method according to any of the claims 1 to 5, where the plastic material layer is made up by a synthetic rubber layer.

11. A method according to any of the claims 1 to 5, where the plastic material layer is made up by a thermoplastic material.

12. A chemically and thermally resistant, high-flexible laminate for use by protection against aggressive fluids, obtained by performing a method according to any of the claims 1 to 11, said laminate comprising:
a first outer layer of fluoropolymer foil;
an intermediate layer consisting of a woven glass fabric dispersed with a modified PTFE dispersion with bonding means and a thickening means, such as Hydrous Calcium Sulphate, in a predetermined amount, so that the amount of thickening means is chosen in accordance with the desired bonding force between a PTFE layer to be laminated to a woven glass fabric, onto which the dispersion is sprayed; and
a second outer layer of an elastomeric plastic material layer.

13. A laminate according to claim 12, wherein the first outer layer, which preferably is the internal layer in the laminate, comprises one or more foils with a thickness of 0.05 to 0.2 mm.

14. A laminate according to claim 12 or 13, wherein the intermediate layer is a woven glass fabric with a material weight of between 100 g/m² to 5000 g/m², preferably approximately 640 g/m² plus the bonding means absorbed in the woven glass fabric.

15. A laminate according to any of the claims 12 to 14, wherein the second outer layer, which preferably is the external layer of the laminate, is a substantially even silicone layer of approx. 50 to 1000 g/m² in material weight, preferably approximately 300 to 500 g/m².

16. A PTFE dispersion for use in a method according to any of the claims 1 to 11 for the manufacture of a laminate according to any of the claims 12 to 15, **characterised in that** the dispersion is modified with a thickening means, such as Hydrous Calcium Sulphate, and wherein the amount of thickening means is chosen in accordance with the desired bonding force between a PTFE layer to be laminated to a woven glass fabric, onto which the dispersion is sprayed.

## Patentansprüche

1. Ein Verfahren zur Herstellung eines hochflexiblen Laminats oder Schichtstoffs zur Verwendung als Schutz gegenüber aggressiven Fluiden oder Medien, aufweisend die folgenden Stufen:
Anwenden einer modifizierten PTFE-Dispersion, die ein Bindemittel und Verdickungsmittel enthält, wobei die Dispersion an eine erste Seite eines gewebten Glasfasergewebes in einer bestimmten Menge aufgebracht wird, um eine gewünschte Bindungskraft zu erzeugen;
Trocknen der Dispersion nach dem Anbringen der Dispersion auf das Glasfasergewebe;
Aufschichten wenigstens einer ungesinterten PTFE-Folie auf die erste Seite unter Einschluss einer darauf folgenden Aufsinterung der PTFE-Folie auf das gewebte mit der Dispersion benetzte Glasfasergewebe.
Anbringen einer elastomeren Kunststoffmaterialschicht auf die zweite Seite des gewebten Glasfasergewebes und
darauf folgendes Behandeln bzw. Aushärten des Laminats.

2. Ein Verfahren nach Anspruch 1, wobei die modifizierte PTFE-Dispersion auf das Glasfasergewebe durch einen oder mehrere Sprühvorgänge aufgesprüht wird.

3. Ein Verfahren nach Anspruch 1, wobei das Trocknen der PTFE-Dispersion bei Temperaturen im Bereich von 100°C bis 200° C stattfindet.

4. Ein Verfahren nach irgendeinem der Ansprüche 1 bis 3, wobei der Laminierungsvorgang das Sintern der Folie auf das Gewebe mit einschließt, wobei die Schichten vermittels von Heizelementen bei vorbestimmten Druck- und Temperaturbedingungen aufgelegt werden.

5. Ein Verfahren nach irgendeinem der Ansprüche 1 bis 4, wobei der Laminationsvorgang das Aufrollen der Folie auf das Gewebe mit einschließt, wobei die Schichten mittels Rollen bei vorbestimmten Druck- und Temperaturbedingungen aufgelegt werden.

6. Ein Verfahren nach irgendeinem der Ansprüche 1 bis 5, wobei die PTFE-Folie eine ungesinterte gereckte PTFE-Folie (ePTFE-Folie) oder eine ungesinterte Standardfolie mit einer oder mehreren Lagen ist.

7. Ein Verfahren nach irgendeinem der Ansprüche 1 bis 6, wobei die Kunststoffmaterialschicht aus einer Silikonschicht hergestellt ist, welche durch Aufrakeln einer Silikonzusammensetzung auf die zweite Seite des gewebten Glasfasergewebes aufgebracht wird.

8. Ein Verfahren nach irgendeinem der Ansprüche 1 bis 7, wobei die Behandlung des Laminats bei einer Temperatur im Bereich von 125° C bis 200° C stattfindet.

9. Verfahren nach irgendeinem der Ansprüche 1 bis 5, wobei die Kunststoffmaterialschicht aus einer Polyurethanschicht (PUR) hergestellt ist.

10. Ein Verfahren nach irgendeinem der Ansprüche 1 bis 5, wobei die Kunststoffmaterialschicht aus einer synthetischen Gummischicht hergestellt ist.

11. Ein Verfahren nach irgendeinem der Ansprüche 1 bis 5, wobei die Kunststoffmaterialschicht aus einem thermoplastischen Material hergestellt ist.

12. Ein chemisch und thermisch widerstandsfähiges hochflexibles Laminat zur Verwendung als Schutz gegen aggressive Fluide oder Medien, welche durch Ausführen eines Verfahrens nach irgendeinem der Ansprüche 1 bis 11 erhalten wird, wobei das Laminat aufweist:
eine erste äußere Schicht aus einer Fluorpolymerfolie;
eine Zwischenschicht, die eine gewebte Glasfaserschicht aufweist, die mit einer modifizierten PTFE-Dispersion mit Binde- und Verdickungsmittel dispergiert ist, beispielsweise mit wässrigem Kalziumsulfat, in einer vorbestimmten Menge, so dass die Menge des Dickungsmittels der gewünschten Bindungskraft mit der auf ein gewebtes Glasfasergewebe geschichteten PTFE-Schicht entspricht, auf welche die Dispersion aufgesprüht wird, und
eine zweite äußere Schicht aus einer elastomeren Kunststoffmaterialschicht.

13. Ein Laminat nach Anspruch 12, wobei die erste äußere Schicht, welche vorzugsweise die innere Schicht des Laminats ist, eine oder mehrere Folien mit einer Dicke von (0,05 bis 0, 2) mm aufweist.

14. Ein Laminat nach einem der Ansprüche 12 oder 13, wobei die Mittelschicht ein gewebtes Glasfasergewebe mit einem Materialgewicht zwischen 100 g/m² bis 5000 g/m², vorzugsweise 640 g/m² ist, und zwar zusätzlich zu dem Bindemittel, welches in dem gewebten Glasfasergewebe absorbiert ist.

15. Ein Laminat nach einem der Ansprüche 12 bis 14, wobei die zweite äußere Schicht, welche vorzugsweise die äußere Schicht des Laminats ist, im Wesentlichen eine Silikonschicht von ungefähr (50 bis 1000) g/m² Materialgewicht, vorzugsweise ungefähr(300 bis 500) g/m² ist.

16. Eine PTFE-Dispersion zur Verwendung in einem Verfahren nach irgendeinem der Ansprüche 1 bis 11 zur Herstellung eines Laminats nach irgendeinem der Ansprüche 12 bis 15, **dadurch gekennzeichnet, dass** die Dispersion mit einem Verdickungsmittel, beispielsweise wässrigen Kalziumsulfat modifiziert worden ist, und wobei der Anteil des Verdickungsmittels gemäß der gewünschten Bindungskraft zwischen einer PTFE-Schicht, die aufzuschichten ist, und einem gewebten Glasfasergewebe ausgewählt wird, auf welchem die Dispersion aufgesprüht wird.

## Revendications

1. Procédé de production d'un stratifié hautement flexible destiné à être utilisé pour la protection contre des fluides agressifs, comprenant les étapes suivantes :
application d'une dispersion de PTFE modifiée incluant un moyen de liaison et un moyen épaississant, ladite dispersion étant appliquée à un premier côté d'une étoffe de verre tissée en une quantité prédéterminée pour obtenir une force de liaison souhaitée ;
séchage de la dispersion après l'application de la dispersion à l'étoffe de verre ;
application d'au moins une feuille de PTFE non frittée sur le premier côté, incluant un frittage subséquent de la feuille de PTFE sur l'étoffe de verre tissée mouillée avec la dispersion ;
application d'une couche de matière plastique élastomère sur le second côté de l'étoffe de verre tissée ; puis
durcissement du stratifié.

2. Procédé selon la revendication 1 où la dispersion de PTFE modifiée est appliquée par pulvérisation sur l'étoffe de verre par une ou plusieurs pulvérisations.

3. Procédé selon la revendication 1 où le séchage de la dispersion de PTFE a lieu à une température dans la plage de 100°C à 200°C.

4. Procédé selon l'une quelconque des revendications 1 à 3 où le processus de stratification inclut un frittage de la feuille sur l'étoffe où les couches sont amenées à franchir des éléments chauffés dans des conditions de pression et de température prédéterminées.

5. Procédé selon l'une quelconque des revendications 1 à 4 où le processus de stratification inclut un laminage de la feuille sur l'étoffe où les couches sont amenées à franchir des éléments chauffés dans des conditions de pression et de température prédéterminées.

6. Procédé selon l'une quelconque des revendications 1 à 5 où la feuille de PTFE peut être une feuille de PTFE expansée (feuille de ePTFE) non frittée ou une feuille standard non frittée en une ou plusieurs couches.

7. Procédé selon l'une quelconque des revendications 1 à 6 où la couche de matière plastique est constituée par une couche de silicone, qui est appliquée par application à la râcle d'un composé silicone sur le second côté de l'étoffe de verre tissée.

8. Procédé selon l'une quelconque des revendications 1 à 7 où le durcissement du stratifié a lieu à une température dans la plage de 125°C à 200°C.

9. Procédé selon l'une quelconque des revendications 1 à 5 où la couche de matière plastique est constituée par une couche de polyuréthane (PUR).

10. Procédé selon l'une quelconque des revendications 1 à 5 où la couche de matière plastique est constituée par une couche de caoutchouc synthétique.

11. Procédé selon l'une quelconque des revendications 1 à 5 où la couche de matière plastique est constituée par une matière thermoplastique.

12. Stratifié hautement flexible, chimiquement et thermiquement resistant, destiné à être utilisé pour la protection contre des fluides agressifs, obtenu par mise en oeuvre d'un procédé selon l'une quelconque des revendications 1 à 11, ledit stratifié comprenant :
une première couche externe de feuille de fluoropolymère ;
une couche intermédiaire consistant en une étoffe de verre tissée sur laquelle est appliquée une dispersion de PTFE modifiée avec un moyen de liaison et un moyen épaississant, comme le sulfate de calcium hydraté, en une quantité prédéterminée, de sorte que la quantité de moyen épaississant est choisie selon la force de liaison souhaitée entre une couche de PTFE destinée à être appliquée sur une étoffe de verre tissée, sur laquelle la dispersion est pulvérisée ; et
une seconde couche externe d'une couche de matière plastique élastomère.

13. Stratifié selon la revendication 12 où la première couche externe, qui est de préférence la couche interne du stratifié, comprend une ou plusieurs feuilles ayant une épaisseur de 0,05 à 0,2 mm.

14. Stratifié selon la revendication 12 ou 13 où la couche intermédiaire est une étoffe de verre tissée avec une masse de matière entre 100 g/m² et 5000 g/m², de préférence d'approximativement 640 g/m² plus le moyen de liaison absorbé dans l'étoffe de verre tissée.

15. Stratifié selon l'une quelconque des revendications 12 à 14 où la seconde couche externe, qui est de préférence la couche externe du stratifié, est une couche de silicone sensiblement uniforme d'approximativement 50 à 1000 g/m² en masse de matière, de préférence d'approximativement 300 à 500 g/m².

16. Dispersion de PTFE destinée à être utilisée dans un procédé selon l'une quelconque des revendications 1 à 11 pour la production d'un stratifié selon l'une quelconque des revendications 12 à 15 **caractérisée en ce que** la dispersion est modifiée avec un moyen épaississant, comme le sulfate de calcium hydraté, et où la quantité de moyen épaississant est choisie selon la force de liaison souhaitée entre une couche de PTFE destinée à être appliquée sur une étoffe de verre tissée, sur laquelle la dispersion est pulvérisée.
